# FASCICULE DE BREVET EUROPEEN

(11) **EP 3 274 565 B1**
(45) Date de publication et mention de la délivrance du brevet: **22.09.2021**
(21) Numéro de dépôt: 16714491.4
(22) Date de dépôt: 22.03.2016
(51) Int. Cl.: F01D 25/24

(54) **ENSEMBLE D'ANNEAU DE TURBINE AVEC DISPOSITIF DE MAINTIEN SPÉCIFIQUE DE SECTEURS D'ANNEAU EN MATERIAU COMPOSITE A MATRICE CERAMIQUE**
TURBINENRINGANORDNUNG MIT BESONDERER HALTEVORRICHTUNG VON RINGSEGMENTEN AUS KERAMISCHEN FASERVERBUNDWERKSTOFF
TURBINE RING ASSEMBLY WITH SPECIFIC HOLDING DEVICE FOR CERAMIC MATRIX COMPOSITE RING SEGMENTS

(30) Priorité: 23.03.2015 FR 1552372
(43) Date de publication de la demande: 31.01.2018
(73) Titulaire: Safran Aircraft Engines, 75015 Paris (FR)
(72) Inventeur: ROUSSILLE, Clément, 33200 Bordeaux (FR); TESSON, Thierry, 33000 Bordeaux (FR)
(74) Mandataire: Cabinet Beau de Loménie
(86) Numéro de dépôt international: PCT/FR2016/050627
(87) Numéro de publication internationale: WO 2016/151233

(56) Documents cités:
- EP-A2- 2 631 434
- US-A1- 2012 171 027

## Description

### Arrière-plan de l'invention

L'invention concerne un ensemble d'anneau de turbine comprenant une pluralité de secteurs d'anneau en matériau composite à matrice céramique ainsi qu'une structure de support d'anneau.

Dans le cas d'ensembles d'anneau de turbine entièrement métalliques, il est nécessaire de refroidir tous les éléments de l'ensemble et en particulier l'anneau de turbine qui est soumis aux flux les plus chauds. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre ces problèmes, il a été envisagé de réaliser des secteurs d'anneau de turbine en matériau composite à matrice céramique (CMC) afin de s'affranchir de la mise en œuvre d'un matériau métallique.

Les matériaux CMC présentent de bonnes propriétés mécaniques les rendant aptes à constituer des éléments de structures et conservent avantageusement ces propriétés à températures élevées. La mise en œuvre de matériaux CMC a avantageusement permis de réduire le flux de refroidissement à imposer lors du fonctionnement et donc d'augmenter la performance des turbomachines. En outre, la mise en œuvre de matériaux CMC permet avantageusement de diminuer la masse des turbomachines et de réduire l'effet de dilatation à chaud rencontré avec les pièces métalliques.

Toutefois, les solutions existantes proposées peuvent mettre en œuvre un assemblage d'un secteur d'anneau en CMC avec des parties d'accrochage métalliques d'une structure de support d'anneau, ces parties d'accrochage étant soumises au flux chaud. Par conséquent, ces solutions d'assemblage peuvent toujours nécessiter la mise en œuvre d'un flux de refroidissement au moins afin de refroidir lesdites parties d'accrochage métalliques. En outre, ces parties d'accrochage métalliques subissent des dilatations à chaud, ce qui peut conduire à une mise sous contrainte mécanique des secteurs d'anneau en CMC et à une fragilisation de ces derniers.

On connait EP 2 631 434 et US 2012/017027 qui décrivent des ensembles d'anneau de turbine.

Il existe donc un besoin pour améliorer les ensembles d'anneau de turbine existants mettant en œuvre un matériau CMC afin de réduire encore la quantité de gaz de refroidissement nécessaire.

Il existe encore un besoin pour améliorer les ensembles d'anneau de turbine existants mettant en œuvre un matériau CMC afin de réduire l'intensité des contraintes mécaniques auxquelles les secteurs d'anneau en CMC sont soumis lors du fonctionnement.

### Objet et résumé de l'invention

A cet effet, l'invention propose, selon un premier aspect, un ensemble d'anneau de turbine comprenant une pluralité de secteurs d'anneau en matériau composite à matrice céramique et une structure de support d'anneau, chaque secteur d'anneau ayant une partie formant base annulaire avec une face interne définissant la face interne de l'anneau de turbine et une face externe à partir de laquelle s'étend une paroi délimitant un logement interne dans lequel un organe de maintien en matériau métallique est présent, l'organe de maintien étant relié à la structure de support d'anneau et comprenant un corps à partir duquel des éléments de maintien élastiquement déformables s'étendent dans le logement interne de chaque côté du corps, les éléments de maintien étant en appui sur la paroi.

Dans l'invention, l'organe de maintien permettant d'assurer le maintien du secteur d'anneau à la structure de support d'anneau est présent dans un logement interne du secteur d'anneau et est, par conséquent, protégé du flux chaud par le secteur d'anneau en CMC lequel présente une faible conductivité thermique et constitue ainsi une barrière thermique pour l'organe de maintien. Le secteur d'anneau en CMC permet ainsi d'obtenir un découplage thermique entre la face interne de l'anneau de turbine et l'organe de maintien. La configuration selon l'invention permet ainsi de réduire la quantité de gaz nécessaire pour refroidir les parties assurant le maintien du secteur d'anneau à la structure de support d'anneau et conduit, par conséquent, à une augmentation des performances du moteur. Par ailleurs, du fait de la dilatation thermique du matériau métallique de l'organe de maintien, ce dernier exerce une pression sur le secteur d'anneau permettant ainsi de le maintenir en position lors du fonctionnement.

Dans un exemple de réalisation, les éléments de maintien peuvent être en appui sur la paroi sur une partie seulement de leur longueur.

Sauf mention contraire, la longueur d'un élément de maintien est mesurée le long de l'axe longitudinal du logement interne.

Une telle caractéristique permet avantageusement d'obtenir un appui local des éléments de maintien sur la paroi et ainsi de maintenir le secteur d'anneau en position tout en lui imposant une faible contrainte mécanique. Une telle configuration permet de faire glisser les éléments de maintien sur la paroi en cas de dilatation différentielle et, par conséquent, de compenser les différences de dilatation entre l'organe de maintien et le secteur d'anneau.

Les éléments de maintien peuvent être en appui sur la paroi sur une longueur inférieure ou égale aux trois-quarts de leur longueur, de préférence inférieure ou égale à la moitié de leur longueur, de préférence encore inférieure ou égale au quart de leur longueur.

Dans un exemple de réalisation, les éléments de maintien peuvent être en appui sur la paroi au niveau de leur partie distale. En particulier, les éléments de maintien peuvent être en appui sur la paroi uniquement au niveau de leur partie distale.

La partie distale d'un élément de maintien correspond à la portion dudit élément de maintien comprise entre son extrémité distale et la zone située à mi-longueur de l'élément de maintien, l'élément de maintien s'étendant entre une extrémité proximale située du côté du corps de l'organe de maintien et une extrémité distale située du côté opposé audit corps.

En particulier, les éléments de maintien peuvent être en appui sur la paroi au niveau des première et deuxième extrémités du logement interne.

Dans un exemple de réalisation, la paroi peut présenter au moins un évidement traversé par au moins un élément de fixation permettant de fixer le corps de l'organe de maintien à la structure de support d'anneau.

Cet évidement permet de raccorder l'organe de maintien à la structure de support d'anneau. Cet évidement peut, en outre, constituer un orifice de ventilation permettant d'amener de l'air de refroidissement au niveau de l'organe de maintien et au niveau du secteur d'anneau.

Dans un exemple de réalisation, la longueur de l'organe de maintien est supérieure ou égale à la moitié de la longueur du logement interne, par exemple supérieure ou égale aux trois-quarts de la longueur du logement interne.

Sauf mention contraire, la longueur de l'organe de maintien est mesurée le long de l'axe longitudinal du logement interne.

Dans un exemple de réalisation, la longueur de tout ou partie des éléments de maintien est supérieure à la longueur du corps de l'organe de maintien, par exemple supérieure ou égale à deux fois la longueur du corps de l'organe de maintien.

Des éléments de maintien ayant une longueur relativement élevée présentent avantageusement une élasticité accrue, ce qui permet d'obtenir un appui particulièrement souple des éléments de maintien sur le secteur d'anneau et ainsi d'encore mieux compenser les différences de dilatation entre l'organe de maintien et le secteur d'anneau sans affecter le maintien en position du secteur d'anneau.

Sauf mention contraire, la longueur du corps de l'organe de maintien est mesurée le long de l'axe longitudinal du logement interne.

En variante, la longueur de tout ou partie des éléments de maintien est inférieure à la longueur du corps de l'organe de maintien.

Tout ou partie des éléments de maintien peuvent présenter une longueur supérieure à leur largeur, de préférence supérieure ou égale à trois fois leur largeur.

La largeur d'un élément de maintien correspond à sa plus grande dimension transversale.

Dans un exemple de réalisation, le logement interne peut s'étendre le long d'un axe longitudinal et les éléments de maintien peuvent être en appui sur la paroi au niveau de zones de maintien symétriques par rapport à l'axe longitudinal.

Dans un exemple de réalisation, les éléments de maintien peuvent être sous la forme de pattes. En variante, les éléments de maintien peuvent être sous la forme de portions évasées. Les portions évasées s'étendent en s'élargissant sur tout ou partie de leur longueur lorsque l'on se déplace du corps de l'organe de maintien vers une des extrémités du logement interne.

La présente invention vise également une turbomachine comprenant un ensemble d'anneau de turbine tel que défini plus haut.

Dans un exemple de réalisation, l'ensemble d'anneau de turbine peut faire partie du distributeur de la turbomachine.

L'ensemble d'anneau de turbine peut faire partie d'une turbine à gaz d'un moteur aéronautique ou peut, en variante, faire partie d'une turbine industrielle.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures 1 et 2 représentent un organe de maintien ainsi qu'un secteur d'anneau relatifs à un premier mode de réalisation selon l'invention,
- la figure 3 est une vue schématique et partielle en section selon la direction tangentielle de l'ensemble schématisé à la figure 2,
- la figure 4 est une vue schématique et partielle, en section perpendiculairement à la direction tangentielle, du secteur d'anneau de la figure 2 une fois monté sur la structure de support d'anneau,
- la figure 5 représente un organe de maintien ainsi qu'un secteur d'anneau relatifs à un deuxième mode de réalisation selon l'invention, et
- la figure 6 représente une coupe selon la direction tangentielle de l'ensemble schématisé à la figure 5.

### Description détaillée de modes de réalisation

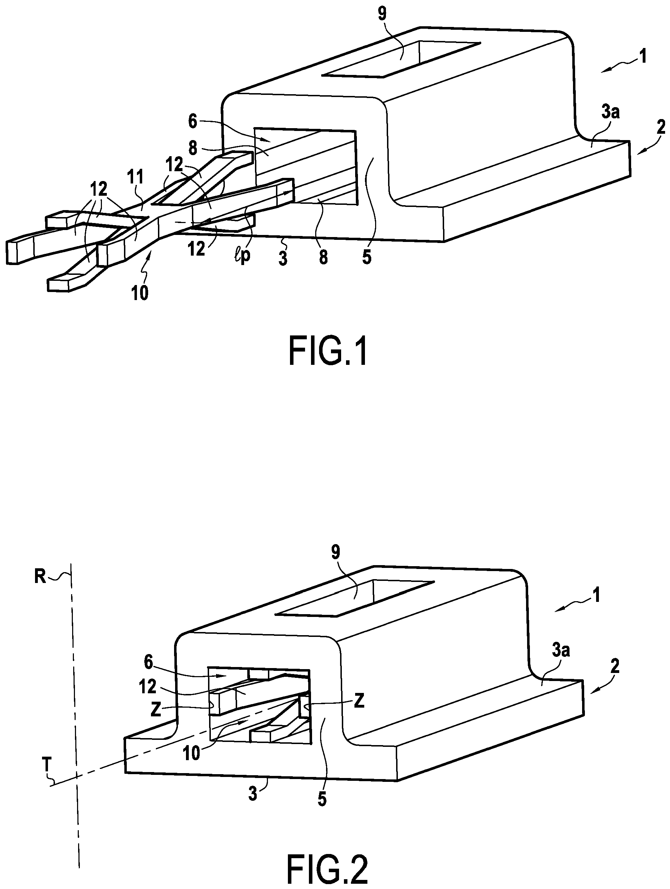

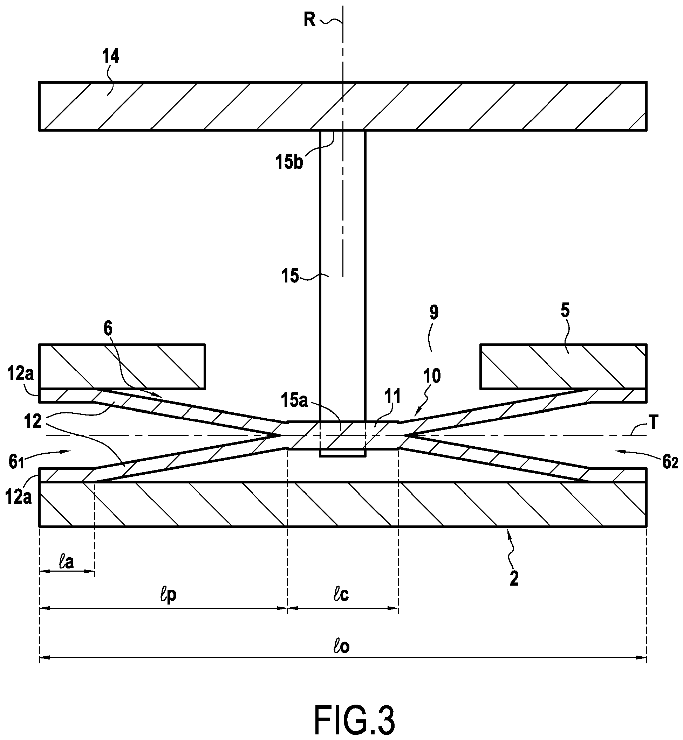

La figure 1 montre un secteur d'anneau de turbine 1 ainsi qu'un organe de maintien 10 selon un premier mode de réalisation selon l'invention. A la figure 1, l'organe de maintien 10 est montré séparé du secteur d'anneau de turbine 1. La figure 2 montre, quant à elle, la configuration de fonctionnement de l'ensemble de la figure 1 dans laquelle l'organe de maintien 10 assure le maintien du secteur d'anneau 1 à la structure de support d'anneau, l'organe de maintien 10 étant logé dans le secteur d'anneau 1. Afin de former un anneau de turbine entourant un ensemble de pales rotatives, une pluralité de secteurs d'anneau 1 chacun munis d'un organe de maintien 10 sont montés sur un carter 14 (voir figure 3) en matériau métallique constituant structure de support d'anneau. De manière connue en soi, les secteurs d'anneau 1 peuvent chacun être munis d'une ou plusieurs lamelles d'étanchéité (non représentées). Ces lamelles d'étanchéité permettent une fois l'ensemble des secteurs d'anneau 1 montés sur la structure de support d'anneau de réduire, voire de supprimer, les fuites d'air entre les secteurs d'anneau 1.

Les secteurs d'anneau 1 sont en une seule pièce et réalisés en CMC. La mise en œuvre d'un matériau CMC pour réaliser les secteurs d'anneau 1 est avantageuse afin de réduire les besoins en ventilation de l'anneau. Les secteurs d'anneau 1 ont une base annulaire 2. La face interne 3 par rapport à la direction radiale R de la base annulaire 2 est revêtue d'une couche de matériau abradable (non représentée aux figures 1 à 3) et définit la veine d'écoulement du flux gazeux dans la turbine. La direction radiale R correspond à la direction selon un rayon de l'anneau de turbine (droite reliant le centre de l'anneau de turbine à sa périphérie). La base annulaire 2 présente en outre une face externe 3a par rapport à la direction radiale R. Les secteurs d'anneau 1 présentent chacun une paroi 5 s'étendant depuis la face externe 3a de la base annulaire 2. La paroi 5 délimite un logement interne 6 s'étendant le long d'un axe longitudinal. Le logement interne 6 s'étend selon la direction tangentielle T. La direction tangentielle T correspond à la direction circonférentielle de l'anneau de turbine.

Un organe de maintien 10 en matériau métallique est présent dans le logement interne 6. L'organe de maintien 10 peut être formé d'un superalliage, par exemple du superalliage « AM1 ». L'organe de maintien 10 comprend un corps 11 duquel s'étendent le long de la direction tangentielle de chaque côté du corps 11 des éléments de maintien 12 en matériau métallique venant en appui sur la paroi 5. Dans l'exemple illustré, le corps 11 n'est pas en appui sur la paroi 5 délimitant le logement interne 6. L'appui de l'organe de maintien 10 sur la paroi 5 est uniquement réalisé au niveau des éléments de maintien 12. Ainsi, les éléments de maintien 12 exercent à eux seuls une pression suffisante sur la paroi 5 afin d'assurer le maintien du secteur d'anneau 1.

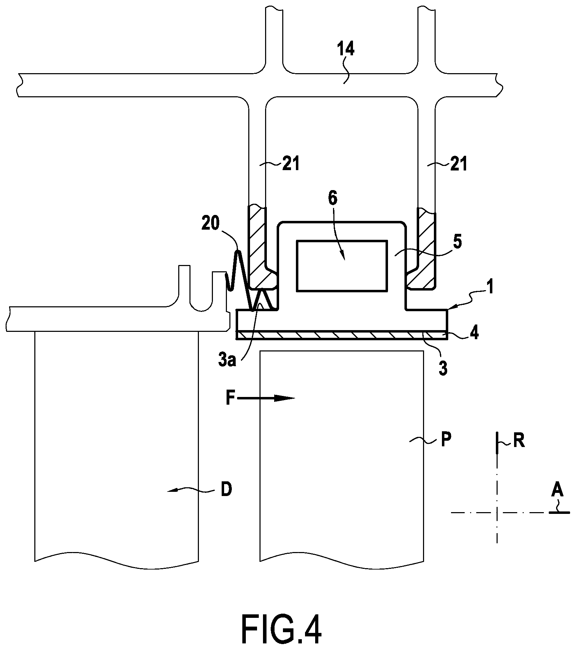

Dans l'exemple illustré, les éléments de maintien 12 sont sous la forme de pattes. La paroi 5 est, dans l'exemple illustré, munie de rainures 8 destinées à coopérer avec les pattes de maintien 12. Dans une variante non illustrée, la paroi n'est pas munie de telles rainures. Comme illustré à la figure 3, un premier ensemble de pattes 12 est en appui sur la paroi 5 du côté de la première extrémité 6₁ du logement interne 6 et un deuxième ensemble de pattes 12 est en appui sur la paroi 5 du côté de la deuxième extrémité 6₂ du logement interne 6. L'organe de maintien 10 est d'une part relié au carter 14 et d'autre part au secteur d'anneau 1 par appui des éléments de maintien 12 sur la paroi 5 délimitant le logement interne 6. Les éléments de maintien 12 exercent une pression sur le secteur d'anneau 1 à la fois le long de la direction radiale R et de la direction axiale A. La direction axiale A correspond à la direction selon l'axe de révolution de l'anneau de turbine ainsi qu'à la direction d'écoulement du flux gazeux dans la veine. Plus précisément, dans l'exemple illustré, une première partie des éléments de maintien 12 applique une pression radiale vers l'extérieur (dans la direction opposée à la veine) et une deuxième partie des éléments de maintien 12 applique une pression radiale vers l'intérieur (vers la veine). Dans l'exemple illustré, il y a autant d'éléments de maintien 12 qui appliquent une pression radiale vers l'extérieur que d'éléments de maintien 12 appliquant une pression radiale vers l'intérieur. De manière analogue, une troisième partie des éléments de maintien 12 applique une pression axiale dans le sens amont et une quatrième partie des éléments de maintien 12 applique une pression axiale dans le sens aval. Les termes « amont » et « aval » sont utilisés ici en référence au sens d'écoulement du flux gazeux dans la turbine (voir flèche F à la figure 4). Dans l'exemple illustré, il y a autant d'éléments de maintien 12 qui appliquent une pression axiale vers l'amont que d'éléments de maintien 12 appliquant une pression axiale vers l'aval. Dans l'exemple illustré, l'organe de maintien 10 réalise huit points d'appui sur la paroi 5 du secteur d'anneau 1 : deux points d'appui où il y a application d'une pression radiale vers l'extérieur, deux points d'appui où il y a application d'une pression radiale vers l'intérieur, deux points d'appui où il y a application d'une pression axiale vers l'amont et deux points d'appui où il y a application d'une pression axiale vers l'aval. Dans l'exemple illustré, les éléments de maintien 12 sont en appui sur plusieurs faces distinctes de la paroi 5 délimitant le logement interne 6. On a représenté aux figures 1 à 3 le cas d'un logement interne 6 traversant, l'invention n'est pas limitée à ce cas, le logement interne pouvant dans des variantes non illustrées par exemple être sous la forme d'un trou borgne.

Le logement interne 6 est accessible depuis l'extérieur du secteur d'anneau 1 au moins par l'intermédiaire d'un évidement 9 traversant situé sur la paroi 5 afin d'assurer la liaison de l'organe de maintien 10 au carter 14 comme schématisé à la figure 3.

Le carter 14 comprend une pluralité d'éléments de fixation 15 sous la forme de pattes d'accrochage s'étendant radialement vers une veine d'écoulement du flux gazeux au travers des évidements 9. Les pattes d'accrochage 15 du carter 14 enserrent le corps 11 de l'organe de maintien 10 afin d'assurer sa fixation au carter 14. Les pattes d'accrochage 15 présentent chacune une zone 15a située en regard du corps 11 de l'organe de maintien ainsi qu'une extrémité radiale externe 15b située du côté du carter 14. Pour réaliser le montage des secteurs d'anneau 1 au carter 14, l'organe de maintien 10 est tout d'abord introduit dans le logement interne 6. L'organe de maintien 10 introduit dans le logement interne 6 est légèrement précontraint à température ambiante (i.e. à une température de 20°C). L'ensemble constitué par le secteur d'anneau 1 et l'organe de maintien 10 logé dans le secteur d'anneau 1 est monté sur le carter 14 en venant enserrer le corps 11 de l'organe de maintien 10 par les pattes d'accrochage 15 du carter 14. On ne sort pas du cadre de l'invention si le corps est fixé au carter autrement que par enserrement, par exemple par vissage.

Comme illustré à la figure 3, les pattes d'accrochage 15 du carter 14 sont partiellement logées dans le logement 6 (i.e. seule une partie de la longueur des pattes d'accrochage 15 est logée dans le logement 6). L'évidement 9 constitue en outre un orifice de ventilation permettant d'amener de l'air de refroidissement au niveau de l'organe de maintien 10 et au niveau du secteur d'anneau 1.

Le fait que l'organe de maintien 10 et qu'une partie des pattes d'accrochage 15 soient logés dans le logement 6 du secteur d'anneau 1 en CMC permet avantageusement de protéger ces éléments de la chaleur du flux gazeux s'écoulant dans la veine puisque le secteur d'anneau 1 est résistant à la chaleur et forme une barrière thermique. Par ailleurs, la présence du phénomène de dilatation différentielle permet avantageusement de maintenir en position axiale et radiale le secteur d'anneau du fait de la pression exercée par l'organe de maintien 10 sur celui-ci lors du fonctionnement.

Comme illustré à la figure 3, les pattes 12 sont en appui sur la paroi 5 sur une longueur lₐ inférieure ou égale au quart de la longueur lₚ des pattes 12. La longueur des pattes lₚ est, par ailleurs, supérieure à la longueur l_{c} du corps 11 de l'organe de maintien 10. Dans l'exemple illustré, les pattes 12 sont en appui sur la paroi 5 au niveau de leur extrémité distale 12a laquelle est située du côté opposé au corps 11. L'organe de maintien 10 s'étend, quant à lui, sur une longueur l₀ sensiblement égale à la longueur du logement interne 6. Ainsi, l'organe de maintien 10 s'étend de la première extrémité 6₁ à la deuxième extrémité 6₂ du logement interne 6. Comme illustré à la figure 1, les pattes 12 sont en appui sur la paroi 5 au niveau de zones de maintien Z symétriques par rapport à la direction tangentielle T. L'organe de maintien 10 comprend ainsi au moins un premier élément de maintien 12 en appui sur la paroi 5 au niveau d'une première zone de maintien Z et au moins un deuxième élément de maintien 12 en appui sur la paroi 5 au niveau d'une deuxième zone de maintien Z symétrique de la première zone de maintien par rapport à la direction tangentielle T (ou par rapport à l'axe longitudinal du logement 6). Les première et deuxième zones de maintien sont décalées radialement ou axialement. Les première et deuxième zones de maintien peuvent chacune appartenir à une face distincte de la paroi 5. Les zones de maintien Z s'étendent sur une partie seulement de la circonférence interne de la paroi 5. Les pattes 12 sont dans l'exemple illustré en appui plan sur la paroi 5.

Chaque secteur d'anneau 1 décrit ci-avant est réalisé en CMC par formation d'une préforme fibreuse ayant une forme voisine de celle du secteur d'anneau et densification du secteur d'anneau par une matrice céramique.

Pour la réalisation de la préforme fibreuse, on peut utiliser des fils en matériau céramique, par exemple des fils de carbure de silicium (SiC) tels que ceux commercialisés par la société japonaise Nippon Carbon sous la dénomination "Nicalon", ou des fils en carbone.

La préforme fibreuse est avantageusement réalisée par tissage tridimensionnel, ou tissage multicouches. Le tissage peut être de type interlock. D'autres armures de tissage tridimensionnel ou multicouches peuvent être utilisées comme par exemple des armures multi-toile ou multisatin. On pourra se référer au document WO 2006/136755.

Après tissage, l'ébauche fibreuse obtenue est mise en forme pour obtenir une préforme de secteur d'anneau qui est ensuite consolidée et densifiée par une matrice céramique, la densification pouvant être réalisée notamment par mise en œuvre d'un procédé d'infiltration chimique en phase gazeuse (CVI) qui est bien connue en soi. Un exemple détaillé de fabrication de secteurs d'anneau en CMC est notamment décrit dans le document US 2012/0027572.

La figure 4 est une vue schématique et partielle, en section perpendiculairement à la direction tangentielle, du secteur d'anneau 1 de la figure 2 une fois monté sur la structure de support d'anneau 14. La figure 4 montre les moyens mis en œuvre afin d'assurer une étanchéité axiale et par souci de simplicité l'organe de maintien 10 et les pattes d'accrochage 15 n'ont pas été représentés. La couche de matériau abradable 4 recouvrant la face interne 3 de la base annulaire 2 a été représentée à la figure 4. La couche de matériau abradable 4 est située en regard d'un ensemble de pales rotatives P. La flèche F représente le sens d'écoulement du flux gazeux dans la turbine. Le flux gazeux s'écoule le long de la direction axiale A du distributeur haute pression D vers le distributeur basse pression (non représenté). Afin d'assurer l'étanchéité axiale, un joint d'étanchéité 20 annulaire est présent sur la face externe 3a de la base annulaire 2 du secteur d'anneau de turbine 1 du côté du distributeur haute pression D. Le secteur d'anneau 1 est en outre enserré au niveau de la paroi 5 par des pattes d'étanchéité 21 du carter 14. Le joint 20 et les pattes 21 empêchent qu'un flux gazeux dirigé axialement ne s'écoule entre le secteur d'anneau 1 et le carter 14.

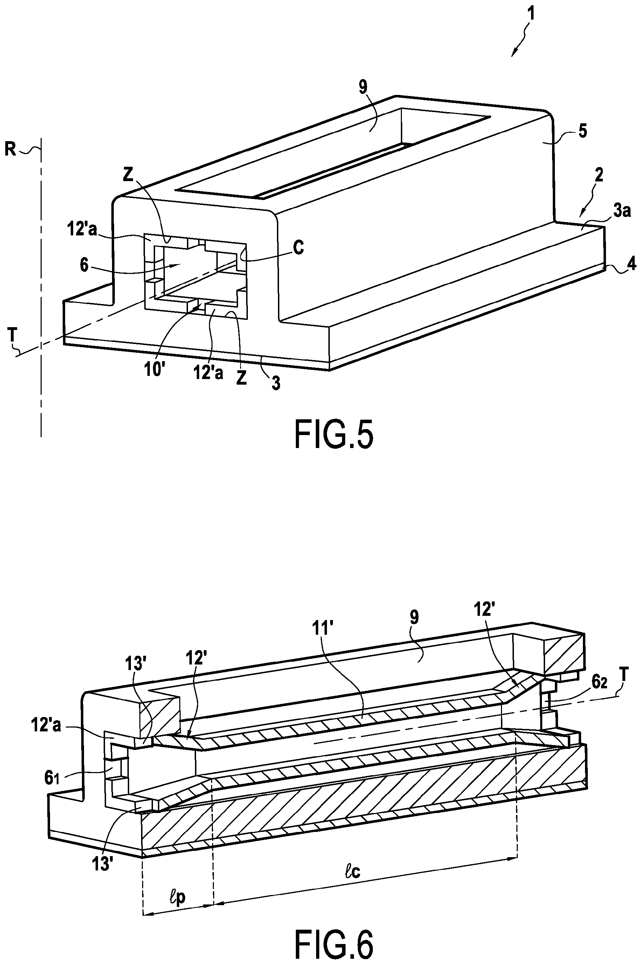

On a représenté aux figures 5 et 6 une variante de réalisation dans laquelle un organe de maintien 10' en matériau métallique est présent dans le logement interne 6. La couche de matériau abradable 4 recouvrant la face interne 3 de la base annulaire 2 a été représentée aux figures 5 et 6. L'organe de maintien 10' est relié à la structure de support d'anneau de la même manière que décrite en lien avec la figure 3. L'organe de maintien 10' comprend un corps 11' duquel s'étendent en direction tangentielle T de chaque côté du corps 11' des éléments de maintien élastiquement déformables 12' qui viennent en appui sur la paroi 5 délimitant le logement interne 6. Les éléments de maintien 12' sont, dans l'exemple illustré aux figures 5 et 6, sous la forme de portions évasées s'étendant depuis le corps 11′ vers les extrémités du logement interne 6. Dans l'exemple illustré, les portions évasées 12′ s'étendent en s'élargissant sur une partie de leur longueur lorsque l'on se déplace du corps 11′ vers une des extrémités 6₁ ou 6₂ du logement interne 6. Les portions évasées 12′ présentent des portions d'appui 13′ situées dans l'exemple illustré au niveau de leur extrémité distale 12′a. Les portions d'appui 13′ sont en appui sur la paroi 5 afin d'assurer le maintien du secteur d'anneau 1 à la structure de support d'anneau. De la même manière que décrit dans l'exemple de réalisation illustré aux figures 1 à 3, les portions évasées 12′ sont en appui sur la paroi 5 délimitant le logement interne 6 au niveau de leur extrémité distale 12′a. Les portions évasées 12′ s'étendent dans cet exemple de réalisation sur une longueur lₚ inférieure à la longueur l_{c} du corps 11′ de l'organe de maintien 10′. Dans l'exemple de réalisation illustré aux figures 5 et 6, les portions d'appui 13′ des portions évasées 12′ sont présentes au niveau des extrémités 6₁ et 6₂ du logement interne 6. Le logement interne 6 présente en coupe perpendiculairement à son axe longitudinal des coins C, les portions d'appui 13′ venant en appui au niveau des coins C du logement interne 6. Dans l'exemple illustré, les portions d'appui 13′ des portions évasées 12′ ne sont pas en contact les unes avec les autres mais on ne sort pas du cadre de l'invention lorsque c'est le cas. Comme dans l'exemple des figures 1 à 3, les portions évasées 12′ sont en appui sur la paroi 5 au niveau de zones Z de maintien symétriques par rapport à l'axe longitudinal du logement interne 6. Dans une variante non illustrée, les portions évasées présentent chacune une unique portion d'appui venant en appui sur tout ou partie de la circonférence interne de la paroi.

Pour réaliser le montage dans cet exemple de réalisation, l'organe de maintien 10′ est introduit dans le logement interne 6 de manière à positionner ses portions d'appui 13′ au niveau des première et deuxième extrémités 6₁ et 6₂ du logement interne 6. L'organe de maintien 10′ introduit dans le logement interne 6 est légèrement précontraint à température ambiante. L'ensemble constitué de l'organe de maintien 10′ et du secteur d'anneau 1 est alors fixé aux pattes d'accrochage du carter de la même manière qu'à la figure 3.

On a représenté dans les exemples de réalisation illustrés un logement interne ayant une forme rectangulaire lorsqu'observé en section perpendiculairement son axe longitudinal. On ne sort pas du cadre de l'invention lorsque le logement interne présente une autre forme comme une forme carrée ou circulaire lorsqu'observé en section perpendiculairement son axe longitudinal.

L'expression « compris(e) entre ... et ... » ou « allant de ... à ... » doit se comprendre comme incluant les bornes.

## Revendications

1. Ensemble d'anneau de turbine comprenant une pluralité de secteurs d'anneau (1) en matériau composite à matrice céramique et une structure de support d'anneau (14), chaque secteur d'anneau (1) ayant une partie formant base annulaire (2) avec une face interne (3) par rapport à la direction radiale (R) définissant la face interne de l'anneau de turbine et une face externe (3a) par rapport à la direction radiale (R) à partir de laquelle s'étend une paroi (5) délimitant un logement interne (6) dans lequel un organe de maintien (10 ; 10′) est présent, l'organe de maintien (10 ; 10′) étant relié à la structure de support d'anneau (14) et comprenant un corps (11 ; 11′) à partir duquel des éléments de maintien (12 ; 12′) élastiquement déformables s'étendent dans le logement interne (6) de chaque côté du corps (11 ; 11′), les éléments de maintien (12 ; 12′) étant en appui sur la paroi (5), l'ensemble d'anneau de turbine étant **caractérisé en ce que** les éléments de maintien exercent une pression le long des directions radiale (R) et axiale (A) sur le secteur d'anneau (1), et **en ce que** l'organe de maintien est en matériau métallique.

2. Ensemble selon la revendication 1, dans lequel les éléments de maintien (12 ; 12′) sont en appui sur la paroi (5) sur une partie seulement de leur longueur.

3. Ensemble selon l'une quelconque des revendications 1 et 2, dans lequel les éléments de maintien (12 ; 12′) sont en appui sur la paroi (5) au niveau de leur partie distale.

4. Ensemble selon la revendication 3, dans lequel les éléments de maintien (12) sont en appui sur la paroi (5) au niveau des première (6₁) et deuxième extrémités (6₂) circonférentielles du logement interne (6).

5. Ensemble selon l'une quelconque des revendications 1 à 4, dans lequel les éléments de maintien sont sous la forme de pattes (12).

6. Ensemble selon l'une quelconque des revendications 1 à 4, dans lequel les éléments de maintien sont sous la forme de portions évasées (12').

7. Ensemble selon l'une quelconque des revendications 1 à 6, dans lequel la longueur de tout ou partie des éléments de maintien (12) est supérieure à la longueur (l_{c}) du corps (11) de l'organe de maintien (10).

8. Ensemble selon l'une quelconque des revendications 1 à 7, dans lequel le logement interne (6) s'étend le long d'un axe longitudinal et les éléments de maintien (12 ; 12′) sont en appui sur la paroi (5) au niveau de zones (Z) de maintien symétriques par rapport à l'axe longitudinal.

9. Ensemble selon l'une quelconque des revendications 1 à 8, dans lequel la paroi (5) présente au moins un évidement (9) traversé par au moins un élément de fixation (15) permettant de fixer le corps (11) de l'organe de maintien (10) à la structure de support d'anneau (14).

10. Turbomachine comprenant un ensemble d'anneau de turbine selon l'une quelconque des revendications 1 à 9.

## Patentansprüche

1. Turbinenringanordnung umfassend eine Vielzahl von Ringsektoren (1) aus Keramikmatrix-Verbundwerkstoff und eine Ringträgerstruktur (14), wobei jeder Ringsektor (1) einen Teil aufweist, der die ringförmige Basis (2) mit einer Innenfläche (3) in Bezug auf die radiale Richtung (R) bildet, welche die Innenseite des Turbinenrings definiert, und eine Außenfläche (3a) in Bezug auf die radiale Richtung (R) aufweist, von der aus sich eine Wand (5) erstreckt, die eine innere Aufnahme (6) begrenzt, in der eine Haltevorrichtung (10; 10′) vorhanden ist, wobei die Haltevorrichtung (10; 10′) mit der Ringträgerstruktur (14) verbunden ist und einen Körper (11; 11') umfasst, von dem aus sich elastisch verformbare Halteelemente (12; 12′) auf beiden Seiten des Körpers (11; 11') in die innere Aufnahme (6) erstrecken, wobei sich die Halteelemente (12; 12′) an der Wand (5) abstützen, wobei die Turbinenringanordnung **dadurch gekennzeichnet ist, dass** die Halteelemente entlang der radialen Richtung (R) und der axialen Richtung (A) Druck auf den Ringsektor (1) ausüben, und dass die Haltevorrichtung aus metallischem Werkstoff besteht.

2. Anordnung nach Anspruch 1, wobei sich die Halteelemente (12; 12′) nur auf einem Teil ihrer Länge an der Wand (5) abstützen.

3. Anordnung nach einem der Ansprüche 1 und 2, wobei sich die Halteelemente (12; 12′) an ihrem distalen Teil an der Wand (5) abstützen.

4. Anordnung nach Anspruch 3, wobei sich die Halteelemente (12) an dem ersten (6₁) und dem zweiten Umfangsende (6₂) der inneren Aufnahme (6) an der Wand (5) abstützen.

5. Anordnung nach einem der Ansprüche 1 bis 4, wobei die Halteelemente in Form von Klauen (12) ausgebildet sind.

6. Anordnung nach einem der Ansprüche 1 bis 4, wobei die Halteelemente in Form von aufgeweiteten Abschnitten (12′) ausgebildet sind.

7. Anordnung nach einem der Ansprüche 1 bis 6, wobei die Länge aller oder eines Teils der Halteelemente (12) größer ist als die Länge (l_{c}) des Körpers (11) der Haltevorrichtung (10).

8. Anordnung nach einem der Ansprüche 1 bis 7, wobei sich die innere Aufnahme (6) entlang einer Längsachse erstreckt und sich die Halteelemente (12; 12′) an der Wand (5) in Haltebereichen (Z) abstützen, die symmetrisch zur Längsachse liegen.

9. Anordnung nach einem der Ansprüche 1 bis 8, wobei die Wand (5) mindestens eine Aussparung (9) aufweist, die von mindestens einem Befestigungselement (15) durchquert wird, mit dem der Körper (11) der Haltevorrichtung (10) an der Ringträgerstruktur (14) befestigt werden kann.

10. Turbomaschine umfassend eine Turbinenringanordnung nach einem der Ansprüche 1 bis 9.

## Claims

1. A turbine ring assembly comprising a ring support structure (14) and a plurality of ring sectors (1) made of ceramic matrix composite material, each ring sector (1) having a portion forming an annular base (2) with an inside face (3) relative to the radial direction (R) defining the inside face of the turbine ring, and an outside face (3a) relative to the radial direction (R) from which there extends a wall (5) defining an internal housing (6) in which a holder member (10; 10') is present, the holder member (10; 10') being connected to the ring support structure (14) and comprising a body (11; 11') from which elastically deformable holder elements (12; 12') extend inside the internal housing (6) on either side of the body (11; 11'), the holder elements (12; 12') bearing against the wall (5), the turbine ring assembly being **characterized in that** the holder elements exert pressure against the ring sector (1) along radial and axial directions (R, A), and **in that** the holder member is made of metal material.

2. An assembly according to claim 1, wherein the holder elements (12; 12') bear against the wall (5) over a portion only of their length.

3. An assembly according to claim 1 or claim 2, wherein the holder elements (12; 12') bear against the wall (5) via their distal portions.

4. An assembly according to claim 3, wherein the holder elements (12) bear against the wall (5) at first and second circumferential ends (6₁, 6₂) of the internal housing (6).

5. An assembly according to any one of claims 1 to 4, wherein the holder elements are in the form of tabs (12).

6. An assembly according to any one of claims 1 to 4, wherein the holder elements are in the form of flared portions (12′).

7. An assembly according to any one of claims 1 to 6, wherein the length of some or all of the holder elements (12) is greater than the length (ℓ_{c}) of the body (11) of the holder member (10).

8. An assembly according to any one of claims 1 to 7, wherein the internal housing (6) extends along a longitudinal axis, and the holder elements (12; 12′) bear against the wall (5) via holder zones (Z) that are symmetrical relative to the longitudinal axis.

9. An assembly according to any one of claims 1 to 8, wherein the wall (5) presents at least one recess (9) through which there passes at least one fastener element (15) enabling the body (11) of the holder member (10) to be fastened to the ring support structure (14).

10. A turbine engine including a turbine ring assembly according to any one of claims 1 to 9.
